# EUROPÄISCHE PATENTANMELDUNG

(11) **EP 3 439 229 A1**
(43) Veröffentlichungstag der Anmeldung: **06.02.2019**
(21) Anmeldenummer: 17184453.3
(22) Anmeldetag: 02.08.2017
(51) Int. Cl.: H04L 9/08

(54) **VERFAHREN UND VORRICHTUNGEN ZUM ERREICHEN EINER SICHERHEITSFUNKTION, INSBESONDERE IM UMFELD EINER GERÄTE- UND/ODER ANLAGENSTEUERUNG**

(71) Anmelder: Siemens Aktiengesellschaft, 80333 München (DE)
(72) Erfinder: Aschauer, Dr. Hans, 81829 München (DE); Falk, Dr. Rainer, 85586 Poing (DE); Fischer, Kai, 85598 Baldham (DE); Fries, Steffen, 85598 Baldham (DE); Heintel, Markus, 81377 München (DE); Klasen, Dr. Wolfgang, 85521 Ottobrunn (DE); Pfau, Axel, 80333 München (DE)

(57) **Zusammenfassung**

Die Erfindung beansprucht ein Verfahren zum Erreichen einer Sicherheitsfunktion für eine Sicherheits-Steuerungseinrichtung (E) zur Steuerung eines Geräts oder einer Anlage, umfassend:
ein Steuerungs-Grundgerät (G), wobei das Steuerungs-Grundgerät derart ausgebildet und eingerichtet ist, dass mittels des Ablaufs eines Steuerungsprogramms im Steuerungs-Grundgerät ein mit dem Steuerungs-Grundgerät verbindbares oder verbundenes Gerät, oder eine damit verbindbare oder verbundene Anlage, steuerbar ist oder gesteuert wird, und ein Sicherheitsmodul (S), welches zur Bereitstellung oder Ausführung einer kryptographischen Funktionalität für das Steuerungs-Grundgerät zur Erreichen der Sicherheitsfunktion ausgebildet ist, wobei das Sicherheitsmodul mittels einer ersten Kopplungsschnittstelle mit dem Steuerungs-Grundgerät mittels einer zur ersten Kopplungsschnittstelle passenden zweiten Kopplungsschnittstelle verbindbar oder verbunden ist, aufweisend folgende Schritte:
a) Bereitstellen zumindest eines ersten Teilgeheimnisses (KS1), welches im Steuerungs-Grundgerät gespeichert ist,
b) Bereitstellen zumindest eines zweiten Teilgeheimnisses (KS2), welches im Sicherheitsmodul gespeichert ist,
c) Zusammenführen des zumindest einen ersten und zweiten Teilgeheimnisses zu einem für das Erreichen der Sicherheitsfunktion benötigten Gesamtgeheimnisses (K) innerhalb des Zeitraums, in dem das Steuerungs-Grundgerät mit dem Sicherheitsmodul über die erste und zweite Kopplungsschnittstelle zusammenwirkt und
d) Unkenntlich machen des zusammengeführten Gesamtgeheimnisses außerhalb des genannten Zeitraums.

## Beschreibung

Die Erfindung betrifft (Betriebs-)Verfahren und Vorrichtungen für eine Sicherheits-Steuerungseinrichtung zur Steuerung eines Geräts oder einer Anlage, wobei die Sicherheits-Steuerungseinrichtung ein Steuerungs-Grundgerät sowie ein Sicherheitsmodul umfasst, wobei das Sicherheitsmodul mit dem Steuerungs-Grundgerät verbindbar ist oder verbunden ist.

Es besteht ein Bedarf, um mit IT-Security-Mechanismen Produkte, beispielsweise Geräte, Gerätekomponenten oder Softwarekomponenten, vor Manipulationen und/oder einem Reverse Engineering zu schützen. Kryptographische IT-Security-Mechanismen sind bereits beispielsweise in Smart Devices, beispielsweise in Geräten des Internets der Dinge, von cyberphysikalischen Systemen, von Automatisierungssystemen der Energietechnik oder von Fertigungssystemen, der Betriebstechnik und von anderen Anlagen in Einsatz.

Der Begriff "Security" bzw. "Sicherheit" bezieht sich im Rahmen der vorliegenden Beschreibung im Wesentlichen auf die Sicherheit, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen ausgeführt werden.

Der Einsatz derartige Sicherheits-Steuerungseinrichtungen bzw. -Verfahren sind möglich. Es ist beispielsweise ein Sicherheitsmodul in der europäische Patentanmeldung EP 16172472.9 bereits vorgeschlagen worden. Hierbei umfasst die Sicherheits-Steuerungseinrichtung ein Steuerungs-Grundgerät sowie ein Sicherheitsmodul, wobei das Sicherheitsmodul mittels einer Datenverbindung über eine Datenschnittstelle mit dem Steuerungs-Grundgerät verbunden ist.

In der Europäischen Anmeldung EP 16172887.8 ist eine Gruppenauthentisierung von Geräten oder auch Komponenten derselben schon vorgeschlagen worden. Nur wenn alle originalen Komponenten im Gerät verfügbar sind, kann sich das Gerät authentifizieren.

Allgemein bekannt ist eine secure Multi-Party Computation (MPC) (https://en.wikipedia.org/wiki/Secure_multi-party_computation) bekannt. In einer Mehr-Parteien-Kommunikation (Multi-Party Communications) bzw. Nachrichtenaustausch kommt es in der Regel darauf an, dass die Parteien private (geheimzuhaltende) Daten mit einer öffentlichen Funktion ggf. mittels einer Vertrauensstelle berechnen lassen können und ein Ergebnis erhalten ohne ihre privaten Daten offenlegen zu müssen. Die "Vertrauensstelle" prüft dabei, ob die Parteien bzw. deren an der Kommunikation beteiligten Geräte vertrauenswürdig sind. Die verschiedenen Eingabewerte für die Berechnung sind dabei geheim und jeweils nur einer Partei (bzw. einer Untermenge derselben) bekannt. Für die Berechnung soll keine zusätzliche vertrauenswürdige Partei benötigt werden. Kryptographische Operationen im Zusammenhang mit MPC sind in der Regel rechenaufwändig.

Nach https://www.dyadicsec.com/technology_mpc/ gibt es ein virtuelles HSM (Hardware Security Module). Ein HSM bezeichnet ein internes oder externes Peripheriegerät für die effiziente und sichere Ausführung kryptographischer Operationen oder Applikationen. Dies ermöglicht zum Beispiel, die Vertrauenswürdigkeit und die Integrität von Daten und den damit verbundenen Informationen in sicherheitskritischen IT-Systemen sicherzustellen. Beim virtuellen HSM wird der kryptographische Schlüssel eines virtuellen HSM auf mehrere Server-Maschinen verteilt. Dabei berechnen die mehreren Server-Maschinen unter Nutzung von MPC gemeinsam eine kryptographische Operation, ohne dass der HSM-Schlüssel vorliegt.

Hinsichtlich der oben erwähnten IT-Security-Mechanismen sind insbesondere im industriellen Umfeld weniger aufwändige Security-Verfahren bzw. -einrichtungen gefragt.

Es ist Aufgabe der vorliegenden Erfindung, Verfahren und Vor- bzw. Einrichtungen mit verbesserten Sicherheits-Eigenschaften insbesondere in einem industriellen Umfeld zur Verfügung zu stellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein Sicherheitsmodul zum Erreichen einer Sicherheitsfunktion geeignet für eine Sicherheits-Steuerungseinrichtung zur Steuerung eines Geräts oder einer Anlage, umfassend:
- Mittel zur Bereitstellung oder Ausführung einer kryptographischen Funktionalität für ein Steuerungs-Grundgerät zum Erreichen der Sicherheitsfunktion, welches mittels des Ablaufs eines Steuerungsprogramms im Steuerungs-Grundgerät ein mit dem Steuerungs-Grundgerät verbindbares oder verbundenes Gerät, oder eine damit verbindbare oder verbundene Anlage steuern kann,
   wobei das Sicherheitsmodul mittels einer ersten Kopplungsschnittstelle mit dem Steuerungs-Grundgerät mittels einer zur ersten Kopplungsschnittstelle passenden zweiten Kopplungsschnittstelle verbindbar oder verbunden ist,
- Mittel zum Empfang zumindest eines ersten Teilgeheimnisses, welches im Steuerungs-Grundgerät gespeichert ist,
- Mittel zum Bereitstellen zumindest eines zweiten Teilgeheimnisses, welches im Sicherheitsmodul gespeichert ist,
- Mittel zum Zusammenführen des zumindest einen ersten und zweiten Teilgeheimnisses zu einem für das Erreichen der Sicherheitsfunktion benötigten Gesamtgeheimnisses innerhalb des Zeitraums, in dem das Steuerungs-Grundgerät mit dem Sicherheitsmodul mittels der ersten und zweiten Kopplungsschnittstelle zusammenwirkt und
- Mittel zum unkenntlich machen des zusammengeführten Gesamtgeheimnisses außerhalb des genannten Zeitabschnitts.

Unkenntlich machen kann im Zusammenhang mit der Erfindung Löschen und/oder Verschleiern und/oder Verbergen und/oder Überschreiben und/oder Maskieren bedeuten. Durch das Unkenntlich machen nach Zusammenführen der Teilgeheimnisse zu einem Gesamtgeheimnis wird die Sicherheit dahingehend erhöht, dass ein Angreifer das Gesamtgeheimnis durch Manipulation nicht abgreifen kann. Das Gesamtgeheimnis kann Inhalt der genannten Mittel zum Zusammenführen sein, welche ein nachstehend näher erläuterter Zwischenspeicher sein kann, wobei dieser Inhalt dann unkenntlich gemacht wird.

Es können entsprechende Mittel z.B. in Form von Sensoren eingesetzt werden, die geeignet sind zum Erkennen einer Abtrennung und/oder eines Abhörens und/oder einer Manipulation im Zusammenwirken mittels der genannten Kopplungsschnittstellen zwischen dem Steuerungs-Grundgerät und dem Sicherheitsmodul. Abhängig vom Erkennen können entsprechende Folgemaßnahmen eingeleitet werden. Eine Manipulation kann hierbei auch eine Überbrückung der Abtrennung der Verbindung sein. Dabei kann eine derartige Folgemaßnahme sein, die eine Sicherheitsfunktion der Sicherheits-Steuerungseinrichtung betrifft, beispielsweise ein entsprechendes Alarmsignal, eine entsprechende Alarm-Nachricht, ein Löschen von Schlüsseln, eine Sperrung von Funktionalitäten oder weitere vergleichbare und/oder ergänzende Aktionen.

Die Erfindung beansprucht des weiteren ein Steuerungs-Grundgerät zum Erreichen einer Sicherheitsfunktion geeignet für eine Sicherheits-Steuerungseinrichtung zur Steuerung eines Geräts oder einer Anlage, welches mittels des Ablaufs eines Steuerungsprogramms im Steuerungs-Grundgerät ein mit dem Steuerungs-Grundgerät verbindbares oder verbundenes Gerät, oder eine damit verbindbare oder verbundene Anlage steuern kann,
wobei das Steuerungs-Grundgerät mittels einer ersten Kopplungsschnittstelle mit einem Sicherheitsmodul mittels einer zu der ersten Kopplungsschnittstelle passenden zweiten Kopplungsschnittstelle verbindbar oder verbunden ist, umfassend:
- Mittel zum Senden zumindest eines ersten Teilgeheimnisses, welches im Steuerungs-Grundgerät gespeichert ist, zum Sicherheitsmodul zum Zusammenführen des zumindest einen ersten und eines zumindest zweiten Teilgeheimnisses, das im Sicherheitsmodul gespeichert ist, zu einem für das Erreichen der Sicherheitsfunktion benötigten Gesamtgeheimnisses und
- eine Steuerungseinheit, welche dazu ausgelegt ist, ein Halten des Inhalts eines für das Gesamtgeheimnis vorgesehenen Zwischenspeichers zu steuern und ein Unkenntlich machen des Inhalts des Zwischenspeichers einzuleiten.

Unter einem Speicher oder einer Speichereinheit kann im Zusammenhang mit der Erfindung beispielsweise ein Speicher in Form von Arbeitsspeicher (engl. Random-Access Memory, RAM) oder eine Festplatte verstanden werden. Ein Arbeitsspeicher oder ein sogenannter Cache (Pufferspeicher) kann als Zwischenspeicher oder auch flüchtiger Speicher angesehen werden. Die Festplatte kann als permanenter oder persistenter Speicher angesehen werden. Der Inhalt eines flüchtigen Speichers kann meist nur mit einer entsprechenden Stromversorgung bzw. Batteriepuffer bzw. Kondensatorpufferung gehalten werden.

Diese Steuerungseinheit kann als Stromversorgungseinheit ausgebildet sein, welche durch Stromversorgung für das Halten des Inhalts des Zwischenspeichers sorgt und durch Unterbrechung der Stromversorgung das Unkenntlich machen des Inhalts einleitet. Mit Unterbrechung der Stromversorgung geht auch die Unterbrechung der Verbindung zwischen Steuerungs-Grundgerät und Sicherheitsmodul einher, womit die Sicherheitsfunktion nicht mehr vollständig gewährleistet werden kann. Oben genannte Manipulation kann auch durch eine Überbrückung der unterbrochenen Stromversorgung herbeigeführt werden.

Die Erfindung beansprucht auch eine Sicherheits-Steuerungseinrichtung, welche das vorgenannte Steuerungs-Grundgerät und das vorgenannte Sicherheitsmodul umfasst.

Dabei ist normalerweise in einem industriellen Umfeld (Anlage, Fertigungssystem o.ä.) das Sicherheitsmodul als "vertrauenswürdig" gegenüber dem Steuerungs-Grundgerät und umgekehrt einzustufen. Somit können die eingangs erwähnten aufwändigen Security-Mechanismen vermieden werden.

Die Sicherheits-Steuerungseinrichtung kann beispielsweise als ein Automatisierungssystem, ein "Controller", eine speicherprogrammierbare Steuerung (eine sogenannte "SPS" oder "PLC"), ein Industrie-PC (ein sogenannter "IPC"), ein Computer, gegebenenfalls inklusive eines Echtzeit-Systems, eine modulare speicherprogrammierbare Steuerung oder eine ähnliche Steuerungseinrichtung ausgebildet und eingerichtet sein.

Die mittels der Sicherheits-Steuereinrichtung steuerbare Anlage beziehungsweise das steuerbare Gerät kann beispielsweise als eine Produktionsanlage, eine Werkzeugmaschine, ein Roboter, ein autonomes Transportsystem und/oder eine ähnliche Einrichtung, Vorrichtung oder Anlage ausgebildet und eingerichtet sein. Beispielsweise kann das Gerät beziehungsweise die Anlage für die Fertigungsindustrie, die Prozessindustrie, die Gebäudeautomatisierung und/oder auch die Energieerzeugung und/oder -verteilung, für ein Verkehrssicherungssystem und/oder eine Verkehrssteuerung ausgebildet oder vorgesehen sein.

Das Steuerungs-Grundgerät kann beispielsweise einem Steuerungsgerät beziehungsweise einem Controller ohne oder mit teilweiser Sicherheitsfunktionalität oder auch vollständiger Sicherheitsfunktion entsprechen. Ein solches Steuerungs-Grundgerät kann beispielsweise als Zentraleinheit einer speicherprogrammierbaren Steuerung, als speicherprogrammierbare Steuerung, als Industrie PC, als PC oder ähnliche Einrichtung ausgebildet und eingerichtet sein.

Dabei kann das Steuerungs-Grundgerät beispielsweise ein Echtzeit-Betriebssystem umfassen, welches eine Echtzeit-Steuerung eines mit dem Grundgerät verbundenen oder verbindbaren Geräts beziehungsweise einer damit verbundenen oder verbindbaren Anlage ermöglicht.

Die Sicherheits-Steuerungseinrichtung kann durch Mittel zum Zusammenführen zumindest eines ersten und zweiten Teilgeheimnisses zu einem für das Erreichen der Sicherheitsfunktion benötigten Gesamtgeheimnisses gekennzeichnet sein, wobei das zumindest eine erste Teilgeheimnis in Teilstücke einer vorgebbaren Größe bzw. Länge zerlegbar ist und nur die Menge an Teilstücken mit dem zumindest zweiten Teilgeheimnis schrittweise mittels einer Berechnungsvorschrift zusammenführbar ist, die entsprechend der Größe und Menge innerhalb eines vorgebbaren Zeitraums während der Ausführung der Berechnungsvorschrift verarbeitbar sind.

Ein weiterer Aspekt der Erfindung ist ein Verfahren zum Erreichen einer Sicherheitsfunktion für eine Sicherheits-Steuerungseinrichtung zur Steuerung eines Geräts oder einer Anlage, umfassend:
- ein Steuerungs-Grundgerät, wobei das Steuerungs-Grundgerät derart ausgebildet und eingerichtet ist, dass mittels des Ablaufs eines Steuerungsprogramms im Steuerungs-Grundgerät ein mit dem Steuerungs-Grundgerät verbindbares oder verbundenes Gerät, oder eine damit verbindbare oder verbundene Anlage, steuerbar ist oder gesteuert wird, und
   - ein Sicherheitsmodul, welches zur Bereitstellung oder Ausführung einer kryptographischen Funktionalität für das Steuerungs-Grundgerät zur Erreichen der Sicherheitsfunktion ausgebildet ist,
   - wobei das Sicherheitsmodul mittels einer ersten Kopplungsschnittstelle mit dem Steuerungs-Grundgerät mittels einer zweiten zur ersten Kopplungsschnittstelle passenden zweiten Kopplungsschnittstelle verbindbar oder verbunden ist,
- aufweisend folgende Schritte:
   a) Bereitstellen zumindest eines ersten Teilgeheimnisses, welches im Steuerungs-Grundgerät gespeichert ist,
   b) Bereitstellen zumindest eines zweiten Teilgeheimnisses, welches im Sicherheitsmodul gespeichert ist,
   c) Zusammenführen des zumindest einen ersten und zweiten Teilgeheimnisses zu einem für das Erreichen der Sicherheitsfunktion benötigten Gesamtgeheimnisses innerhalb des Zeitraums, in dem das Steuerungs-Grundgerät mit dem Sicherheitsmodul mittels der ersten und zweiten Kopplungsschnittstelle zusammenwirkt und
   d) Unkenntlich machen des zusammengeführten Gesamtgeheimnisses außerhalb des genannten Zeitraums.

Unter "Bereitstellen" kann im Zusammenhang mit der Erfindung beispielsweise ein Erstellen, Laden oder ein Speichern, des Teilgeheimnisses auf oder von einem Datenträger bzw. Plattform verstanden werden.

Eine Weiterbildung der Erfindung sieht vor, dass das Gesamtgeheimnis temporär in einem Zwischenspeicher des Sicherheitsmoduls zur Verarbeitung des dort bereitgehaltenen Inhalts bereitgestellt wird, wobei das Gesamtgeheimnis unmittelbar nach Verarbeitung des im Zwischenspeichers bereitgehaltenen Inhalts und/oder nach einem vorgebbaren Zeitablauf und/oder in vorgebbaren regelmäßigen Zeitabständen unkenntlich gemacht wird.

Eine Weiterbildung der Erfindung sieht vor, dass der Inhalt des Zwischenspeichers durch eine Stromversorgung seitens des Steuerungs-Grundgeräts gehalten wird.

Eine Weiterbildung der Erfindung sieht vor, dass das Zusammenführen des zumindest einen ersten und zweiten Teilgeheimnisses zu einem für das Erreichen der Sicherheitsfunktion benötigten Gesamtgeheimnisses derart durchgeführt wird, dass das zumindest eine erste Teilgeheimnis in Teilstücke einer vorgebbaren Größe bzw. Länge zerlegt wird und nur die Menge an Teilstücken mit dem zumindest zweiten Teilgeheimnis schrittweise mittels einer Berechnungsvorschrift zusammengeführt werden, die entsprechend der Größe und Menge innerhalb eines vorgebbaren Zeitraums während der Ausführung der Berechnungsvorschrift verarbeitbar sind.

Das erste Teilgeheimnis kann dabei durch einen Wert, z.B. einen Schlüssel, repräsentiert werden, welcher aus einer sogenannten PUF (physical unclonable function) generiert wird.

Das erste Teilgeheimnis kann dabei ein öffentlicher Schlüssel und das zweite Teilgeheimnis kann ein privater Schlüssel sein. Sowohl erstes und zweites Teilgeheimnis können aus einem öffentlichen Anteil und einem privaten Anteil bestehen, die auch private oder öffentlich Schlüssel sein.

Unter einem "(Gesamt-)Geheimnis", insbesondere auch als ein "Geheimnis in Form einer Zeichenkette", kann im Zusammenhang mit der Erfindung beispielsweise eine Lizenzinformation, ein kryptographischer Schlüssel, insbesondere ein symmetrischer Schlüssel oder ein privater Schlüssel eines asymmetrischen Schlüsselpaares, verstanden werden. Unter einem "Geheimnis" kann im Zusammenhang mit der Erfindung beispielsweise auch ein Passwort für einen Zugriff auf eine Lizenzinformation oder auf einen kryptographischen Schlüssel verstanden werden. Das Geheimnis kann beispielsweise anhand einer weiteren Sicherheitsrichtlinie erzeugt werden, die beispielsweise eine Schlüssellänge oder einen Berechnungsalgorithmus für den Schlüssel angibt. Insbesondere der Ausdruck "rekonstruiertes Geheimnis" kann im Zusammenhang mit der Erfindung gleichbedeutend verwendet werden.

Unter einem "Teilgeheimnis" kann im Zusammenhang mit der Erfindung beispielsweise ein Anteil an dem Geheimnis verstanden werden, das vorzugsweise von einer der Komponenten eines Gerät oder Anlage gespeichert wird. Ein Geheimnis in Form einer Zeichenkette kann beispielsweise auf mehrere Teilzeichenketten aufgeteilt werden, wobei insbesondere ein Teilgeheimnis zumindest einen Teil der Teilzeichenketten umfasst und somit in Teilstücke unterteilt sein kann.

Unter "sicherheitsgeschützt" kann im Zusammenhang mit der Erfindung beispielsweise verstanden werden, dass insbesondere nur lesend auf eine sicherheitsgeschützte Komponente oder Speichereinheit zugegriffen werden kann oder dass insbesondere nur eine bestimmte Komponente zugreifen kann oder bestimmte Komponenten zugreifen können. Hierzu können beispielsweise die entsprechenden sicherheitsgeschützten Komponenten Schutzmodule oder Versiegelungen aufweisen.

Die Kopplungsschnittstelle kann als eine Datenschnittstelle zwischen dem Sicherheitsmodul und dem Steuerungs-Grundgerät ausgebildet sein, welche beispielsweise eine drahtgebundene oder drahtlose Schnittstelle sein kann. Dabei kann die erste Kopplungsschnittstelle und die dazu passende zweite Kopplungsschnittstelle beispielsweise über eine Kombination von entsprechend komplementären Steckverbinder-Komponenten oder auch über entsprechende Kontaktflächen oder -stifte erfolgen. Dabei kann die Schnittstelle als eine serielle oder parallele Schnittstelle ausgebildet und eingerichtet sein. Weiterhin kann die Schnittstelle zwischen Sicherheitsmodul und Steuerungs-Grundgerät auch als Drahtlos-Schnittstelle, z.B. eine WLAN-, eine Bluetooth- oder eine NFC-Schnittstelle (NFC: Near Field Communication) ausgebildet und eingerichtet sein. Bei einer Drahtlosschnittstelle kann die Stromzufuhr ähnlich wie bei einem drahtlosen Laden bei Mobilfunkgeräten implementiert sein.

Weiterhin kann das Sicherheitsmodul zudem auch mechanisch mit dem Steuerungs-Grundgerät verbunden sein, insbesondere lösbar mit dem Steuerungs-Grundgerät verbunden sein. Derartige Verbindungen können beispielsweise über entsprechende Verrastungen, Verklemmungen, Verschraubungen oder beliebige Kombinationen davon erfolgen.

Zudem kann vorgesehen sein, dass die Energieversorgung des Sicherheitsmoduls über das Steuerungs-Grundgerät erfolgt, beispielsweise über die genannten Kopplungsschnittstellen bzw. darin integrierte Schnittstellen zur Energieversorgung. Das Sicherheitsmodul kann auch eine eigene Energiequelle umfassen, wie beispielsweise eine Batterie, ein wiederaufladbarerer Akku, ein Kondensator und/oder eine vergleichbare Energiequelle. Die Energiequelle des Sicherheitsmoduls dient der Pufferung des Zwischenspeichers, um dessen Inhalt bei einer Auftrennung der oben genannten Verbindung zwischen Steuerungs-Grundgerät und Sicherheitsmodul unkenntlich machen zu können.

Die Sicherheitsfunktion der Sicherheits-Steuereinrichtung kann beispielsweise jede Funktion zur Verschlüsselung, zum Schutz der Vertraulichkeit, zum Integritätsschutz, zur Authentifikation von Daten und/oder Ähnlichem bestehen. Daten können dabei z.B. Nutzerdaten, Steuerdaten, Konfigurationsdaten und/oder administrative Daten sein.

Dabei wird die jeweilige Sicherheitsfunktion der Sicherheits-Steuereinrichtung durch ein Zusammenwirken von Steuerungs-Grundgerät und Sicherheitsmodul erreicht.

Dabei wird unter einem gelösten Sicherheitsmodul ein solches verstanden, welches zumindest keine Verbindung mehr mit dem Steuerungs-Grundgerät aufweist. Dementsprechend ist keine Stromversorgung für das Sicherheitsmodul durch das Steuerungs-Grundgerät mehr gegeben. Demnach ist auch im Zwischenspeicher dann kein Geheimnis gespeichert.

Dabei kann das Trennen der Verbindung zwischen dem Steuerungs-Grundgerät und dem Sicherheitsmodul beispielsweise durch räumliche Trennung der Schnittstellen-Verbindungselemente von Steuerungs-Grundgerät und Sicherheitsmodul erfolgen. Das Herstellen der Verbindung zwischen dem Steuerungs-Grundgerät und dem Sicherheitsmodul kann beispielsweise mittels Annähern und/oder Kontaktieren eines Schnittstellen-Verbindungselements des Sicherheitsmoduls und des Schnittstellen-Verbindungselements des Steuerungs-Grundgeräts erfolgen. Dabei kann das Herstellen der Verbindung weiterhin auch eine nachfolgende Kommunikation zur Herstellung einer funktionierenden Datenverbindung umfassen.

Kopplungsschnittstellen-Verbindungselemente von Steuerungs-Grundgerät und dem jeweiligen Sicherheitsmodul können beispielsweise entsprechend zusammenwirkende Steckerelemente, Kontaktelemente oder auch Antennen umfassen oder aus solchen bestehen. Weiterhin kann das Sicherheitsmodul entsprechend einem Sicherheitsmodul gemäß der vorliegenden Beschreibung ausgebildet und eingerichtet sein.

Des Weiteren wird ein Computerprogramm(produkt) mit Programmbefehlen zur Durchführung der genannten erfindungsgemäßen Verfahren beansprucht, wenn es auf einer Sicherheits-Steuerungseinrichtung nach einem der vorangehend genannten Einrichtungsansprüche abläuft oder auf einem computerlesbaren Medium gespeichert ist.

Zusätzlich kann eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine sein.

Die Verfahren, Vorrichtungen und Computerprogramm(produkte) können entsprechend der Weiterbildungen/Ausführungsformen die oben genannten Sicherheits-Steuereinrichtung, Sicherheitsmodul und Steuerungsgrundgerät und deren Weiterbildungen/Ausführungsformen ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
Die Figur beispielhaft eine Sicherheits-Steuerungseinrichtung mit Steuerungs-Grundgerät und mit Sicherheitsmodul zur Steuerung einer Anlage.

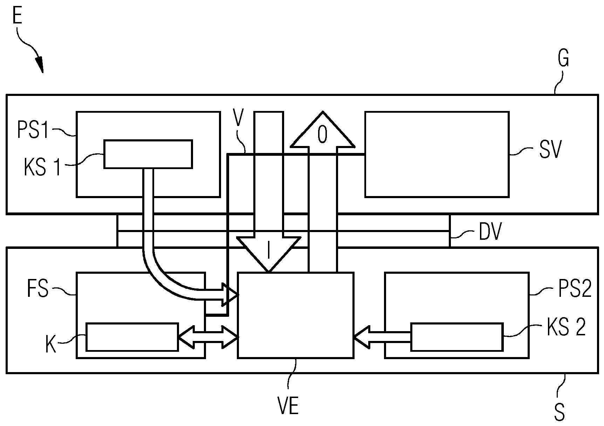

Fig. 1 zeigt eine Sicherheits-Steuerungseinrichtung E zur Steuerung einer in der Figur nicht dargestellten Anlage. Über eine Datenverbindung DV mittels einer Daten- bzw. eine I/I-Schnittstelle können Eingabedaten I und Ausgabedaten O zwischen einem Steuerungs-Grundgerät G und zumindest einem Sicherheitsmodul S ausgetauscht werden. Das Sicherheitsmodul kann ein Security-Token sein. Die Verbindung bzw. ein Zusammenwirken des genannten Geräts G und des genannten Moduls S kann über eine erste Kopplungsschnittstelle, z.B. ein Steckerelement, und eine zur ersten Kopplungsschnittstelle passenden zweiten Kopplungsschnittstelle, z.B. ein entsprechendes Gegen-Steckerelement (die beide in der Figur nicht explizit dargestellt sind), hergestellt werden. Zudem umfasst das Steuerungs-Grundgerät eine Steuerungseinheit beispielsweise ausgestaltet als Stromversorgungseinheit SV, die über eine Versorgungsanbindung V, welche in die Datenverbindung DV integriert sein kann, mit einem flüchtigen Zwischenspeicher FS des Sicherheitsmoduls S verbindbar oder verbunden ist. Das Sicherheitsmodul weist zudem eine Verarbeitungseinheit VE mit einem Prozessor auf, wobei in einem persistenten Speicher PS2 des Sicherheitsmoduls ein Teilgeheimnis z.B. in Form eines Schlüssels KS2 oder einer Ableitung davon abgelegt ist. Im persistenten Speicher PS1 des Steuerungsgrundgeräts G ist ebenso ein Teilgeheimnis KS1 abgelegt. Über die Datenverbindung DV wird bei bestehender Stromversorgung durch SV das Teilgeheimnis KS1 zur Verarbeitungseinheit VE übertragen. Die Verarbeitungseinheit VE holt aus dem Speicher PS2 das Teilgeheimnis KS2. Diese beiden Teilgeheimnisse werden in VE dann zu einem Gesamtgeheimnis K zusammengeführt und im Zwischenspeicher FS des Sicherheitsmoduls S abgelegt. Dieses Gesamtgeheimnis kann dann für das Erreichen einer Sicherheitsfunktion durch die Sicherheits-Steuerungseinrichtung E an ein Gerät oder eine Anlage weitergeleitet werden, um mit dem Gesamtgeheimnis z.B. ein Schlüssel oder eine Ableitung des Gesamtgeheimnisses eine Verschlüsselung im Gerät oder der Anlage zu erreichen. Berechnungen mit dem Schlüssel oder dessen Ableitung sollen nicht möglich sein, wenn das Sicherheits-Grundgerät vom Sicherheitsmodul getrennt ist.

Zur Berechnung der kryptographischen Funktion z.B. Verschlüsselung wird das benötigte Geheimnis (geheimer Schlüssel, privater Schlüssel) auf mehrere Teilgeheimnisse KS1, KS2 aufgeteilt. Dabei sollte jedes Teilgeheimnis für sich genommen die jeweiligen Sicherheitsanforderungen an die geforderte kryptographische Stärke erfüllen (z.B. 128-bit symmetrische Sicherheit). Die jeweiligen Teilgeheimnisse können dann zu dem für die kryptographische Funktion benötigten Gesamtgeheimnis verbunden bzw. zusammengeführt werden (z.B. durch Konkatenation K:= KS1 | KS2 oder durch Ableiten eines Schlüssels aus den mehreren Teilgeheimnissen mittels einer Schlüsselableitungsfunktion, abgekürzt KDF, z.B. K:= KDF(KS1, KS2).

Der gebildete Schlüssel K liegt in einem löschbaren Zwischenspeicher FS des Sicherheitsmoduls vor. Dies hat den Vorteil, dass der gebildete Schlüssel nur im laufenden Betrieb vorliegt, jedoch nicht in einem abgeschalteten Zustand.

Die Stromversorgung der modularen Sicherheitskomponente erfolgt durch das Sicherheits-Grundgerät. Die Verbindung zwischen Grundgerät und Sicherheitsmodul ist so ausgeführt, dass beim Lösen der Verbindung die Stromversorgung unterbrochen wird. Bei unterbrochener Stromversorgung verliert der Zwischenspeicher FS seinen Speicherinhalt und damit auch das zusammengeführt Gesamtgeheimnis K z.B. in Form des gebildeten Schlüssels.

Das Sicherheitsmodul kann über eine Batteriepufferung (z.B. Kondensator, Super-Cap, Akkumulator, Lithium-Ionen-Batterie) verfügen, um bei Unterbrechung der Stromversorgung das Gesamtgeheimnis K sicher unkenntlich machen, z.B. zu löschen bzw. durch Überschreiben mit einem vorgebbaren Bitmuster.

Ein Teil des kryptographischen Geheimnisses, d.h. das Teilgeheimnis KS1) wird ausschließlich außerhalb der Sicherheitsmoduls im Speicher des Steuerungs-Grundgeräts G persistent im Speicher PS1 gespeichert. Ein anderer Teil (Teilgeheimnis KS2) wird ausschließlich auf dem Sicherheitsmodul PS2 persistent im Speicher PS2 gespeichert. Das Gesamtgeheimnis kann zuvor insgesamt auf dem Sicherheitsmodul generiert worden sein, sodass ein Teil des Geheimnisses das Sicherheitsmodul nie verlässt.

Vor bzw. zeitgleich mit dem Aufruf der kryptographischen Funktion wird der extern gespeicherte Teil des Geheimnisses (Teilgeheimnis KS1) an das Sicherheitsmodule übergeben und fließt in die Berechnung ein. Ein berechnetes Geheimnis K wird im Sicherheitsmodul nur in einem flüchtigen Zwischenspeicher z.B. FS gehalten. Beim Auftrennen der Verbindung zum Steuerungs-Grundgerät geht das Geheimnis K auf dem Sicherheitsmodul verloren. Das benötigte Gesamtgeheimnis K kann nur rekonstruiert werden, wenn das Sicherheitsmodul wieder mit demselben Steuerungs-Grundgerät verbunden wird und Geheimnis KS1 erneut an VE zur Berechnung übergeben wird.

Die Verarbeitungseinheit VE ermöglicht vorzugsweise eine serielle Verarbeitung des Teilgeheimnisses KS1:
Beim Zusammenführen mit dem Teilgeheimnis KS2 wird wie folgt vorgegangen:
   KS1[x]: Teilgeheimnis KS1 bit x
   H: geeignete kryptographische Einwegfunktion, z.B. HMAC
   K := H(H(H(KS2 | KS1[0]) | KS1[1]) | KS1[n]), wobei "|" die Konkatenation der Teilstücke 0 bis n eines Teilgeheimnisses - hier im Beispiel KS1 - in seriellen Verarbeitungsschritten von VE repräsentiert.

Zusätzlich kann das Sicherheitsmodul eine Logik enthalten, die den Spannungsabfall beim Trennen der Stromverbindung V erkennt, und zusätzlich ein aktives Überschreiben des flüchtigen Zwischenspeichers FS auslöst. Dazu weist das Sicherheitsmodul einen (kleinen) Energiepuffer auf, der den flüchtigen Zwischenspeicher FS ausreichend für den Löschvorgang versorgt.

Die Steckverbindung zwischen Grundgerät und modularer Sicherheitskomponente kann so ausgeführt werden, dass eine Überbrückung der Stromversorgung beim Auftrennen der Stromverbindung V konstruktiv ver-/behindert wird. Der Steckverbinder kann einen seitlichen Zugang zu den Steckkontakten durch eine Wand mechanisch verhindern.

Die modulare Sicherheitskomponente kann über zusätzliche eine Sensorik aufweisen, die eine Überbrückung der Stromversorgung durch das Steuerungs-Grundgerät erkennt und den Inhalt des flüchtigen Zwischenspeichers zerstört. Dazu kann z.B. der Spannungspegel, ein Innenwiderstand oder eine Impedanz der Stromversorgung gemessen und hinsichtlich einer unzulässigen Manipulation geprüft werden.

Der flüchtige Zwischenspeicher auf der modularen Sicherheitskomponente kann regelmäßig zufällig maskiert werden (Zufallsmaske kann auch im flüchtigen Zwischenspeicher gehalten werden). Dadurch können Einbrenneffekte im flüchtigen Zwischenspeicher verhindert werden. D.h. dass der Speicherinhalt des Geheimnisses K kann nicht im Klartext gespeichert ist, sonder nur in maskierter Form abhängig von einer zufällig oder pseudozufällig erzeugten, wechselnden Maske (z.B. Kstore := K XOR Mask).

Die Flüchtigkeit des Zwischenspeichers für das Teilgeheimnis KS1 (typischerweise einige 100bit) kann durch geeignete Maßnahmen erhöht werden, in dem mögliche alternative Speicherarten zu klassischen DRAM verwendet werden.

Speichertechnologien oder Registern bzw. Flip-Flops sind z.B.:
- zirkulares Schieberegister, um wiederum Einbrenneffekte zu vermeiden
- Verzögerungsleitung (Laufzeitspeicher, delay line)

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zum Erreichen einer Sicherheitsfunktion für eine Sicherheits-Steuerungseinrichtung (E) zur Steuerung eines Geräts oder einer Anlage, umfassend:
- ein Steuerungs-Grundgerät (G), wobei das Steuerungs-Grundgerät derart ausgebildet und eingerichtet ist, dass mittels des Ablaufs eines Steuerungsprogramms im Steuerungs-Grundgerät ein mit dem Steuerungs-Grundgerät verbindbares oder verbundenes Gerät, oder eine damit verbindbare oder verbundene Anlage, steuerbar ist oder gesteuert wird, und
- ein Sicherheitsmodul (S), welches zur Bereitstellung oder Ausführung einer kryptographischen Funktionalität für das Steuerungs-Grundgerät zur Erreichen der Sicherheitsfunktion ausgebildet ist,
- wobei das Sicherheitsmodul mittels einer ersten Kopplungsschnittstelle mit dem Steuerungs-Grundgerät mittels einer zur ersten Kopplungsschnittstelle passenden zweiten Kopplungsschnittstelle verbindbar oder verbunden ist,
- aufweisend folgende Schritte:
a) Bereitstellen zumindest eines ersten Teilgeheimnisses (KS1), welches im Steuerungs-Grundgerät gespeichert ist,
b) Bereitstellen zumindest eines zweiten Teilgeheimnisses (KS2), welches im Sicherheitsmodul gespeichert ist,
c) Zusammenführen des zumindest einen ersten und zweiten Teilgeheimnisses zu einem für das Erreichen der Sicherheitsfunktion benötigten Gesamtgeheimnisses (K) innerhalb des Zeitraums, in dem das Steuerungs-Grundgerät mit dem Sicherheitsmodul über die erste und zweite Kopplungsschnittstelle zusammenwirkt und
d) Unkenntlich machen des zusammengeführten Gesamtgeheimnisses außerhalb des genannten Zeitraums.

2. Verfahren nach dem vorhergehenden Anspruch, **dadurch gekennzeichnet, dass** das Gesamtgeheimnis temporär in einem Zwischenspeicher (FS) des Sicherheitsmoduls zur Verarbeitung des dort bereitgehaltenen Inhalts bereitgestellt wird, wobei das Gesamtgeheimnis unmittelbar nach Verarbeitung des im Zwischenspeichers bereitgehaltenen Inhalts und/oder nach einem vorgebbaren Zeitablauf und/oder in vorgebbaren regelmäßigen Zeitabständen unkenntlich gemacht wird.

3. Verfahren nach einem der vorhergehenden Ansprüche, **dadurch gekennzeichnet, dass** der Inhalt des Zwischenspeichers durch eine Stromversorgung (SV) seitens des Steuerungs-Grundgeräts gehalten wird.

4. Verfahren nach dem vorhergehenden Anspruch, **dadurch gekennzeichnet, dass** eine Sensorik im Sicherheitsmodul vorgesehen ist, welche eine Unterbrechung und/oder Manipulation der Stromversorgung erkennt und gegebenenfalls eine Folgemaßnahme veranlasst.

5. Verfahren nach einem der vorhergehenden Ansprüche, **dadurch gekennzeichnet, dass** eine Abtrennung und/oder ein Abhören und/oder eine Manipulation im Zusammenwirken mittels der genannten Kopplungsschnittstellen zwischen dem Steuerungs-Grundgerät und dem Sicherheitsmodul erkannt, erfasst und/oder protokolliert wird und gegebenenfalls eine Folgemaßnahme eingeleitet wird.

6. Verfahren nach einem der vorhergehenden Ansprüche, **dadurch gekennzeichnet, dass** das Zusammenführen des zumindest einen ersten und zweiten Teilgeheimnisses zu einem für das Erreichen der Sicherheitsfunktion benötigten Gesamtgeheimnisses derart durchgeführt wird, dass das zumindest eine erste Teilgeheimnis in Teilstücke einer vorgebbaren Größe zerlegt wird und nur die Menge an Teilstücken mit dem zumindest zweiten Teilgeheimnis schrittweise mittels einer Berechnungsvorschrift zusammengeführt werden, die entsprechend der Größe und Menge innerhalb eines vorgebbaren Zeitraums während der Ausführung der Berechnungsvorschrift verarbeitbar sind.

7. Verfahren nach einem der vorhergehenden Ansprüche, **dadurch gekennzeichnet, dass** das erste Teilgeheimnis durch einen Wert repräsentiert wird, welcher aus einer sogenannten PUF generiert wird.

8. Sicherheitsmodul (S) zum Erreichen einer Sicherheitsfunktion geeignet für eine Sicherheits-Steuerungseinrichtung (E) zur Steuerung eines Geräts oder einer Anlage, umfassend:
- Mittel zur Bereitstellung oder Ausführung einer kryptographischen Funktionalität für ein Steuerungs-Grundgerät (G) zum Erreichen der Sicherheitsfunktion, welches mittels des Ablaufs eines Steuerungsprogramms im Steuerungs-Grundgerät ein mit dem Steuerungs-Grundgerät verbindbares oder verbundenes Gerät, oder eine damit verbindbare oder verbundene Anlage steuern kann,
wobei das Sicherheitsmodul mittels einer ersten Kopplungsschnittstelle mit dem Steuerungs-Grundgerät mittels einer zur ersten Kopplungsschnittstelle passenden zweiten Kopplungsschnittstelle verbindbar oder verbunden ist,
- Mittel zum Empfang zumindest eines ersten Teilgeheimnisses (KS1), welches im Steuerungs-Grundgerät gespeichert ist,
- Mittel zum Bereitstellen zumindest eines zweiten Teilgeheimnisses (KS2), welches im Sicherheitsmodul gespeichert ist,
- Mittel zum Zusammenführen des zumindest einen ersten und zweiten Teilgeheimnisses zu einem für das Erreichen der Sicherheitsfunktion benötigten Gesamtgeheimnisses (K) innerhalb des Zeitraums, in dem das Steuerungs-Grundgerät mit dem Sicherheitsmodul mittels der ersten und zweiten Kopplungsschnittstelle zusammenwirkt und
- Mittel zum unkenntlich machen des zusammengeführten Gesamtgeheimnisses außerhalb des genannten Zeitabschnitts.

9. Sicherheitsmodul nach dem vorhergehenden Anspruch, **dadurch gekennzeichnet, dass** Mittel zum Erkennen einer Abtrennung und/oder eines Abhörens und/oder einer Manipulation im Zusammenwirken mittels der genannten Kopplungsschnittstellen zwischen dem Steuerungs-Grundgerät und dem Sicherheitsmodul aufweist und eine Folgemaßnahme eingeleitet kann.

10. Steuerungs-Grundgerät (G) zum Erreichen einer Sicherheitsfunktion geeignet für eine Sicherheits-Steuerungseinrichtung (E) zur Steuerung eines Geräts oder einer Anlage, welches mittels des Ablaufs eines Steuerungsprogramms im Steuerungs-Grundgerät ein mit dem Steuerungs-Grundgerät verbindbares oder verbundenes Gerät, oder eine damit verbindbare oder verbundene Anlage steuern kann, wobei das Steuerungs-Grundgerät mittels einer ersten Kopplungsschnittstelle mit einem Sicherheitsmodul (S) mittels einer zur ersten Kopplungsschnittstelle passenden zweiten Kopplungsschnittstelle verbindbar oder verbunden ist, umfassend:
- Mittel zum Senden zumindest eines ersten Teilgeheimnisses (KS1), welches im Steuerungs-Grundgerät gespeichert ist, zum Sicherheitsmodul zum Zusammenführen des zumindest einen ersten und eines zumindest zweiten Teilgeheimnisses (KS2), das im Sicherheitsmodul gespeichert ist, zu einem für das Erreichen der Sicherheitsfunktion benötigten Gesamtgeheimnisses (K) und
- eine Steuerungseinheit, welche dazu ausgelegt ist, ein Halten des Inhalts eines für das Gesamtgeheimnis vorgesehenen Zwischenspeichers zu steuern und ein Unkenntlich machen des Inhalts des Zwischenspeichers einzuleiten.

11. Steuerungs-Grundgerät nach dem vorhergehenden Anspruch **dadurch gekennzeichnet, dass** die Steuerungseinheit als Stromversorgungseinheit (SV) ausgebildet ist, welche durch Stromversorgung für das Halten des Inhalts des Zwischenspeichers sorgt und durch Unterbrechung der Stromversorgung das Unkenntlich machen des Inhalts einleitet.

12. Sicherheits-Steuerungseinrichtung (E) umfassend ein Steuerungs-Grundgerät nach Anspruch 10 oder 11 und ein Sicherheitsmodul nach Anspruch 8 oder 9.

13. Sicherheits-Steuerungseinrichtung nach dem vorhergehenden Anspruch, **gekennzeichnet durch** Mittel zum Zusammenführen des zumindest einen ersten (KS1) und zweiten Teilgeheimnisses (KS2) zu einem für das Erreichen der Sicherheitsfunktion benötigten Gesamtgeheimnisses (K), wobei das zumindest eine erste Teilgeheimnis in Teilstücke einer vorgebbaren Größe zerlegbar ist und nur die Menge an Teilstücken mit dem zumindest zweiten Teilgeheimnis schrittweise mittels einer Berechnungsvorschrift zusammenführbar ist, die entsprechend der Größe und Menge innerhalb eines vorgebbaren Zeitraums während der Ausführung der Berechnungsvorschrift verarbeitbar sind.

14. Computerprogrammprodukt mit Programmcodemitteln zur Durchführung des Verfahrens nach einem der vorangehenden Verfahrensansprüche, wenn es auf einer Sicherheits-Steuerungseinrichtung nach einem der vorangehenden Einrichtungsansprüche abläuft oder auf einem computerlesbaren Medium gespeichert ist.
